# EUROPEAN PATENT SPECIFICATION

(11) **EP 1 968 764 B1**
(45) Date of publication and mention of the grant of the patent: **14.08.2013**
(21) Application number: 06839238.0
(22) Date of filing: 11.12.2006
(51) Int. Cl.: B23K 20/12

(54) **FRICTION STIR WELDING METHOD**
REIBRÜHRSCHWEISSVERFAHREN
PROCEDE DE SOUDAUGE PAR FRICTION MALAXAGE

(30) Priority: 20.12.2005 US 312118
(43) Date of publication of application: 17.09.2008
(73) Proprietor: THE BOEING COMPANY, Chicago, IL 60606-2016 (US)
(72) Inventor: AGARWAL, Aditya N., Brea, CA 92821 (US); KEENER, Steven G., Trabuco Canyon, CA 92679-1185 (US); RUNYAN, Max, Huntington Beach, CA 92649 (US); WHITTEN, Ronald, S., Trabuco Canyon, CA 92676 (US)
(74) Representative: Gahlert, Stefan
(86) International application number: PCT/US2006/046948
(87) International publication number: WO 2007/075303

(56) References cited:
- WO-A1-2004/014593
- US-A- 5 614 037
- US-A1- 2004 041 006

## Description

### BACKGROUND OF THE INVENTION

The present invention relates to the formation of an assembly by friction stir welding articles and, more particularly relates to the formation of such an assembly that includes an organic, curable coating material selectively disposed on one or more of the articles proximate to the friction stir weld joint.

Friction stir welding generally refers to a metallurgical joining or assembly process in which structural components or articles are positioned in intimate contact to define an abutting or overlapping interface, and a rotating friction stir welding tool or pin is forcibly plunged or urged into the articles and simultaneously traversed along the interface. The tool or pin generates sufficient friction within the structural articles to plasticize a portion of the articles, and the plasticized material is mixed by the pin. As the plasticized material cools and reconsolidates, a friction stir weld joint is formed, characterized by a mixed portion having a refined grain structure, referred to as a nugget core. The friction stir welding process is further described, e.g., in U.S. Patent No. 5,460,317.

The friction stir welding process has been proposed as an alternative to the mechanical fastening or joining process such as the riveting process that is conventionally used for assembling aircraft parts. That is, instead of riveting or otherwise mechanically fastening the articles of an aircraft, the articles can be metallurgically joined with friction stir weld joints. However, in either case, the joined articles typically define an interface therebetween, and the interface can be susceptible to corrosion and/or intrusion by chemicals, moisture, or other fluids and particulates. Accordingly, existing wet viscous sealants can be disposed in the interfaces to seal the articles, preventing the entry of foreign materials and protecting the articles against corrosion at the joint. The provision of such wet viscous sealants is generally time consuming and expensive. Further, the quality of the joints can be reduced if the wet sealants are not provided, if the sealants are squeezed or otherwise removed from the interface during joining, or if the sealants dry out and deteriorate or otherwise work free from the joint over time.

In addition, the wet-sealant compounds that are conventionally used for corrosion protection and pressure and fuel sealing of aluminum-alloy aircraft structural components typically contain toxic, solvent-based compounds. Therefore, various precautions must be taken to protect personnel using them and ensure their safe disposal. Such wet sealants are also generally messy and difficult to work with, typically requiring extensive clean-up using caustic chemical solutions.
WO 2004/014593 discloses a method of welding, such as by friction stir welding, surfaces having a sealant layer therebetween, wherein the elevated temperature of the welding process cures the sealant.
US 2004/0041006 discloses a method for welding according to the preamble of claim 1 in which faying surfaces of two structural members, via friction welding, wherein an exothermically reacted sealant is disposed in an interface defined by the faying surfaces.

Thus, there exists a need for an improved method for forming a corrosion resistant connection in an assembly. The method should be compatible with the friction welding process and should not be overly expensive or time consuming. Further, the method should preferably not require the use of conventional wet-sealants compounds for corrosion protection.

### SUMMARY OF THE INVENTION

The present invention provides a method for forming a friction stir welded assembly according to claim 1. The method includes coating a surface portion of an article and then friction stir welding the article to form an assembly, which is subsequently thermally treated to simultaneously heat treat the articles and cure the coating.

According to the present invention, the method includes providing first and second articles, both of which comprise an aluminum alloy, and providing a corrosion resistant, curable organic coating material. The coating material includes a phenolic resin and an organic solvent. The coating material is selectively applied to a first surface portion of the first article so that a second surface portion of the first article adjacent the first surface portion remains substantially uncoated. The articles are configured in a predetermined configuration with the first and second surface portions in contact with another surface, e.g., with the first and second surfaces of the first article in contact with a correspondingly contoured surface of the second article. The articles are friction stir welded to form a friction stir weld interface or joint at the second surface portion of the first article so that the first surface portion remains substantially unwelded, thereby forming a welded structural assembly. The resulting structural assembly is then heated to an elevated temperature sufficient to simultaneously heat-treat at least one of the articles and adequately cure the organic coating. In some cases, one or both of the articles are also subjected to a thermal treatment after the coating is applied and prior to being friction stir welded to thereby at least partially cure the coating material.

According to one aspect of the invention, the coating material is applied by masking the second surface portion with a maskant, applying the coating material to the first surface portion adjacent the second surface portion, and removing the maskant so that the second surface portion is uncoated. In any case, the coating material can be applied along first and second opposite edges of the second surface portion so that the second surface portion defines a path extending along the first article. The articles can then be friction stir welded by moving a friction stir welding tool or pin along the path to form the friction stir weld interface or joint extending elongate along the path.

Thus, the method of the present invention can be used to form a friction stir welded assembly with improved corrosion resistance proximate to the friction stir weld connection between the articles. In particular, the coating material that is disposed proximate to the friction stir weld can protect the surfaces of the assembly proximate to the joint, e.g., between the mating articles that are joined to form the assembly.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:

Figure 1 is a block diagram schematically illustrating the steps for forming an assembly according to a method of one embodiment of the present invention;

Figure 2 is a perspective view illustrating an article for forming an assembly according to one embodiment of the present invention;

Figure 3 is an elevation view illustrating the article of Figure 2 positioned with a second article for forming an assembly, such as an aircraft assembly;

Figure 4 is a perspective view illustrating the articles of Figure 3 during friction stir welding for forming an assembly;

Figure 5 is a photograph illustrating a cross-section of an assembly having a friction stir weld joint ; and

Figure 6 is a photograph illustrating a cross-section of an assembly having a friction stir weld joint.

### DETAILED DESCRIPTION OF THE INVENTION

The present invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. Like numbers refer to like elements throughout.

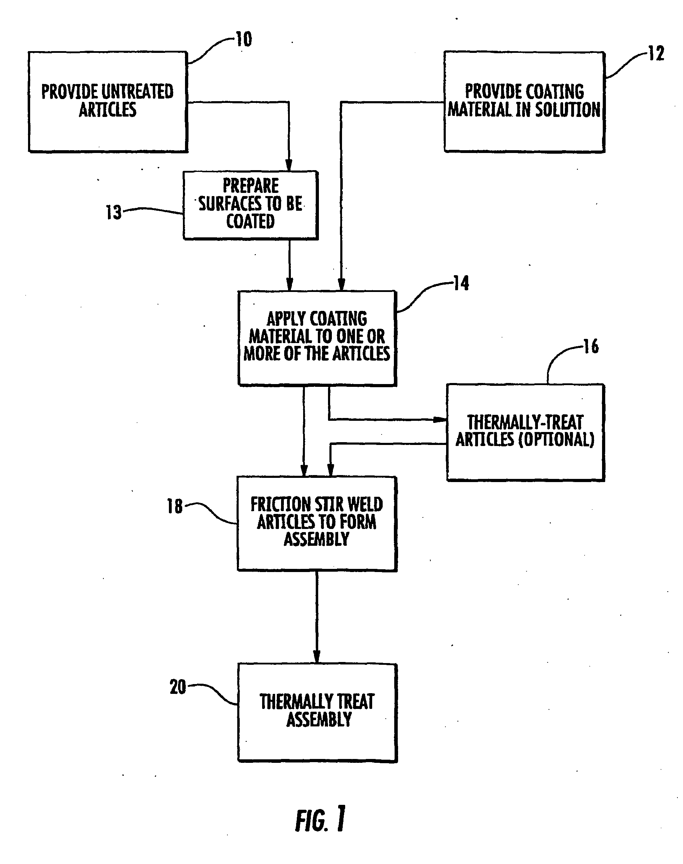

Referring now to the drawings, Figure 1 is a block diagram schematically illustrating the steps for forming a structural assembly according to one embodiment of the present invention. Briefly, the method includes providing untreated articles or components and a coating material. See blocks 10 and 12. The coating material is applied to one or more of the articles. See block 14. In some cases, the coated articles are then thermally treated. See block **16.** Thereafter, the articles are friction stir welded to form an assembly and subsequently thermally treated to simultaneously heat treat the articles and cure the coating. See blocks **18** and **20.** Each of these operations is described more fully below.

With regard to the articles that are provided at block **10** and thereafter coated and assembled, the present invention provides a method for assembling metallic articles, which are formed of aluminum-alloy materials. The various articles that are to be joined as a single assembly can be formed of the same material or different materials. For example, a first article that is formed of a first aluminum-alloy material can be joined to a second article that is formed of a second aluminum-alloy material that is different from the first alloy.

The terms "aluminum-alloy" or "aluminum-alloy material" are used herein to refer to alloys having more than 50 percent by weight aluminum but less than 100 percent by weight of aluminum. Typically aluminum-alloy materials used in the present invention have between about 85 and 98 percent by weight of aluminum, with the balance being alloying elements, and a minor amount of impurity. Alloying elements can be added in precisely controlled amounts to predictably modify the properties of the aluminum-alloy material. Such alloying elements include magnesium, copper, and zinc, as well as other elements. In particular, the articles or components **22, 26** can be formed of extruded, untreated 7075 aluminum-alloy material, or 7150 aluminum-alloy material. Other suitable alloys include, but are not limited to, 2000, 4000, 6000, and 7000 series heat-treatable aluminum-alloy materials.

The assemblies can be used in any of various applications, including as aircraft structural components such as wing and fuselage skin panels, stiffeners (which include but are not limited to spars, ribs, stringers, longerons, frames, and clips), hinges, doors, and the like. In addition, the method can be used for other types of assemblies, including assemblies used in other aerospace structures, other vehicles such as automobiles and marine vehicles, building structures, and the like. The articles are typically provided with properties that correspond to the intended application of the finished assembly. For example, each of the articles can be provided with a shape and dimensions that are appropriate for the corresponding portion of the assembly to be formed therefrom.

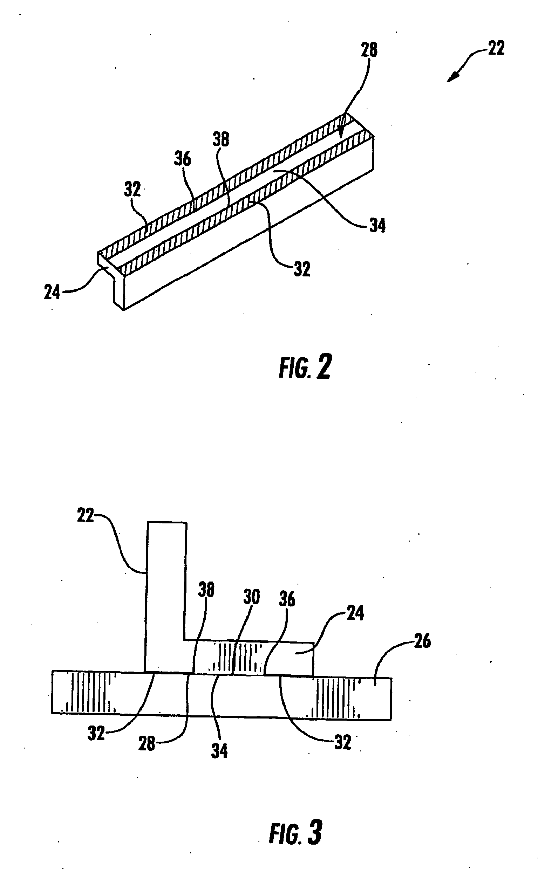

For purposes of illustration, Figure 2 illustrates a first article 22 that has an angle shape, i.e., an elongate member with an L-shaped cross section. In an exemplary embodiment shown in Figure 3, a base flange **24** of the first article **22** is to be joined to a second article **26** that has a planar configuration. In other embodiments, one of both of the articles **22, 26** can be otherwise configured, e.g., to define other shapes such as a plane, an angle, a curve, a tube, a channel, or the like. Further, it is appreciated that any number of articles can be assembled according to the present invention.

The articles **22, 26** can be provided at block **10** of Figure 1 in a partially treated condition. For example, prior to the coating operation, the articles **22, 26** can be artificially-aged and/or anodized. However, the articles **22, 26** may or may not be in a fully heat-treated state. In particular, the articles **22, 26** are not fully annealed prior to the coating operation.

In particular, the articles, and hence the resulting assembly, is made of an aluminum-alloy having a temper achieved by artificial-aging to its final state. The distinction between artificial and natural-aging is that during precipitation heat treatment, artificial-aging involves heating the article to an elevated temperature for a prolonged period. Natural-aging is accomplished at room temperature over an extended period. The alloying elements of each article can be selected so that the articles can be processed to have a relatively soft state, e.g., by heating to an elevated temperature for a period of time and thereafter quenching to a lower temperature. This process is termed "solution heat treating." In the solution heat-treating process, solute elements are dissolved into the alloy matrix (i.e., solution-treating) and retained in solution by the rapid quenching.

After the component is solution-treated/annealed, it may be further processed to increase its strength several fold to have desired high-strength properties as described below. Such further processing, typically by a precipitation-hardening/aging process, may be accomplished either by heating to an elevated temperature for a period of time (termed artificial-aging) or by holding at room temperature for a longer period of time (termed natural-aging). In conventional Aluminum Association terminology, different artificial-aging, precipitation heat treatments (some in combination with intermediate deformation or cold working), produce the basic T6, T7, T8, or T9 temper conditions. A natural-aging precipitation treatment produces the basic T3 or T4 temper conditions. Some alloys require artificial-aging and other alloys may be aged in either fashion. The treated structural components of the present invention are commonly made of both types of materials. In both types of aging, strengthening occurs as a result of the formation of second-phase particles, typically termed precipitates, in the aluminum-alloy matrix. Collectively, all of the processing steps leading to their strengthening are generally termed "heat treating," wherein the component is subjected to one or more periods of exposure to an elevated temperature for a duration of time. Heating and cooling rates are selected to aid in producing the desired final properties. The temperatures, times, and other parameters required to achieve particular properties are known to those skilled in the field of aluminum-alloys and metallurgy.

At block **13,** the articles can be subjected to a variety of additional processing steps in preparation of the subsequent coating and welding operations. For example, in one embodiment of the present invention, the articles are chromic-acid anodized, except for the surface portions **32** that are to be coated and welded, in accordance with Douglas Process Standard (DPS) 11.01-03 or MIL-A-8625. Alternatively, a solvent can be used to degrease the surface portions **32, 34** that are to be coated and welded using an alkaline clean, deoxide procedure. Preferably, the outer layer of the surfaces **32, 34** can be removed, e.g., using Scotch Brite™ (medium grit abrasive), to a depth of about 0.0025 mm(0.00010) inch to 0.0075 mm (0.00030) inch in order to remove any existing mill scale oxide layer. The clean surfaces **32, 34** can then be cleaned, e.g., by wiping with isopropyl alcohol. The cleaned surface can be air dried for about 10 minutes to allow the surfaces to dry. A maskant is then applied to the second surface portions **34,** and the coating material is applied.

The coating material that is provided at block **12** for coating the articles **22, 26** is typically an organic, corrosion-inhibiting coating material that can be used to coat (or "pre-treat") the articles. Various such coatings can be used. For example, U.S. Patent No. 5,614,037 describes coating materials and coating methods that can be used to pre-treat aircraft fasteners, such as rivets, before installation. The coatings and coating methods described therein can similarly be used in the present invention. In particular, U.S. Patent No. 5,614,037 describes coating the fasteners with organic coating materials to protect the base metal of the fasteners and surrounding adjacent structure against corrosion damage. The fastener is first fabricated and then optionally heat treated to its required strength. After the optional heat treatment, the fastener is etched with a caustic soda bath or otherwise cleaned to remove any scale produced in the heat treatment. The coating material, dissolved in a volatile carrier liquid, is applied to the fastener by spraying, dipping, or the like. The carrier liquid is allowed to evaporate by means of subjecting the coated fastener to an elevated temperature for a period of time to flash cure the coating, typically one hour at 204°C (400°F.).

One exemplary coating material of this type comprises resin mixed with one or more plasticizers, other organic components such as polytetrafluororoethylene, and inorganic additives such as aluminum powder and/or chromates, such as strontium chromate, barium chromate, zinc chromate, and the like. These coating components are preferably dissolved in a suitable solvent present in an amount to produce a desired application consistency. For the coating material just discussed, the solvent is a mixture of ethanol, toluene, and methyl ethyl ketone. A typical sprayable coating solution has about 30 weight percent ethanol, about 7 weight percent toluene, and about 45 weight percent methyl ethyl ketone as the solvent; and about 2 weight percent strontium chromate, about 2 weight percent aluminum powder, balance phenolic resin and plasticizer as the coating material. A small amount of polytetrafluoroethylene may optionally be added. For example, such a curable organic coating is Hi-Kote® 1 from Hi-Shear Corporation, Torrance, California, the entire content of which is hereby incorporated by reference. Hi-Kote® 1 has an elevated temperature curing treatment of 1-4 hours at 177°C - 204°C (350°-400° F.) as recommended by the manufacturer. Alternatively, non-chromated coatings may be used. These coating materials can be dispersed in a suitable solvent present in an amount to produce a desired consistency depending upon the application selected. The solvent may be an ethanol mixture but preferably is an aqueous medium. Other coatings are described in U.S. Patent No. 6,953,509.

In the case of the preferred Hi-Kote 1, the as-sprayed coating was analyzed by EDS analysis. The heavier elements were present in the following amounts by weight: Al, 82.4 percent; Cr, 2.9 percent; Fe, 0.1 percent; Zn, 0.7 percent; and Sr, 13.9 percent. The lighter elements such as carbon, oxygen, and hydrogen were detected in the coating but were not reported because the EDS analysis for such elements is not generally accurate.

The coating material is typically directly applied to only one of the mating surfaces of the articles. For example, in the embodiment illustrated in Figures 2 and 3, the coating material is applied directly to the first article **22** and not the second mating article **26.** More particularly, the coating material is applied to a surface **28** of the first article **22** that is to be positioned against a corresponding surface **30** of the second mating article **26** and consequently joined to the second article **26.** In this regard, the corresponding surfaces **28, 30** of the first and second articles **22, 26** can define corresponding similar contours such as planar, curved, angled, or other formed mating surfaces.

The coating material is selectively applied to the article(s), typically according to the adjacent path of the weld joint that is to be formed between the articles. For example, as illustrated in Figure 2, the first article **22** defines first surface portions **32** and a second surface portion **34.** The coating material is provided on the first surface portions **32** but not on the second surface portion **34,** such that the weld joint can be formed coincident with the second portion **34** and substantially unaffected by or interfere with the coating material. In particular, two first surface portions **32** can be disposed on opposite sides of the second surface portion **34** so that the first portions **32** define opposite edges **36, 38** of the second portion **34.** As illustrated, each of the portions **32, 34** can extend longitudinally along the article **22** so that the second portion **34** defines the path along the article **22,** and the path is bounded on two sides by the first portions **32,** which are coated.

The application of the selective coating of the article **22** can be achieved by masking the second surface portion **34** to prevent the deposition of the coating material thereon. That is, a maskant such as a tape or other removable material can be applied to the second surface **34** portion before the coating application operation. The first surface portions **32** can be coated with the coating material using any of various deposition processes, such as spraying, brushing, dipping, and the like. After the first portions **32** are coated, the maskant can be removed, thereby removing any coating material disposed over the second portion **34.** Alternatively, the coating material can be selectively applied without the use of a maskant, e.g., using a controlled coating application process, such as a printing process for depositing the coating material.

The coating thickness achievable by the present invention may vary according to the preferred end-result characteristics of the coated article, the assembly of the articles, and the coating itself. The coating is typically sufficiently thin to avoid interfering with the mating of the articles and the formation of the weld joint therebetween. For example, the coating achieved on the first article **22** before assembly with the second article **26** can have a thickness that is less than about 0.025 mm (0.001 inch), e.g., between about 0.0038 mm (0.00015 inch) and about 0.0089 mm (0.00035 inch)

Typically, only one of the articles is coated, and the surface portions of the article that are coated are those portions that are to be positioned in contact with another mating article but not directly welded to the other article. For example, as illustrated in Figures 2 and 3, the entire surface **28** of the first article **22** is to be put in contact with the second article **26.** The first surface portions **32,** which are coated, can each have a width that leaves sufficient width for the second surface portions **34** therebetween, such that the weld joint can be formed coincident with the second surface portion **34** and separate from the first surface portions **32.** In particular, in the 'case of a first article **22** with a base flange **24** that is about 22.2 mm (0.875 inch)wide, each coated first surface portion **32** can be about 6.35 mm(0.250 inch) wide so that the second surface portion **34** therebetween has a width of about 9.53 mm (0.375 inch).

In some cases, multiple articles can be coated and/or a coated surface of one article can be placed in contact with the coated surface of another article when the articles are joined. Further, it is appreciated that multiple coatings can be applied to one article, e.g., with the multiple coatings applied to different portions of the article and/or with multiple coatings applied in successive, overlapping layers on one or more surface portions.

As indicated at block **16,** the articles can be subjected to an optional thermal treatment operation after the coatings are applied but before the articles are joined by the friction stir welding process. For example, the articles **22, 26** can be heated to partially cure the coating material so that the articles **22, 26** can be easily handled without disturbing the coating material. In particular, articles made of 7075-T6 aluminum-alloy material can be aged by heating to about 160°C (320°F) for a time period of about 15 to 18 hours to achieve a -T76 temper. Alternatively, the articles can be treated at about 93°C (200°F) for approximately 2 minutes in order to 'flash cure' the coating material for subsequent handling until the complete aging process for the coated article material can be performed. In any case, if the articles are not to be immediately assembled by friction stir welding, the articles can be preserved in a dry environment, e.g., by bagging the articles with a desiccant.

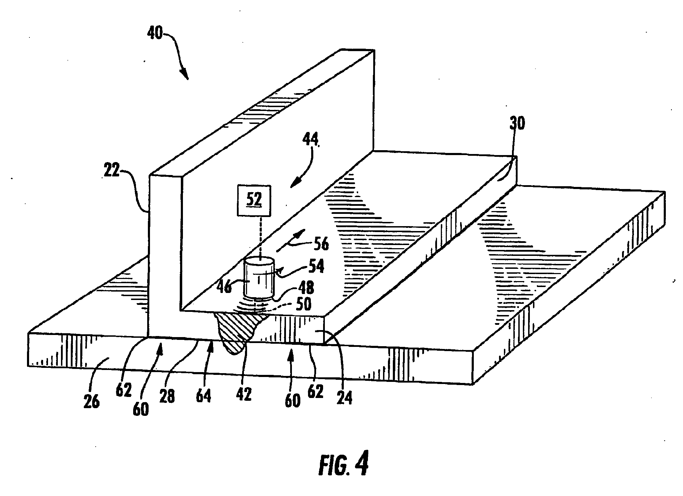

The friction stir welding operation of block **18** is performed with the articles arranged and positioned in a predetermined configuration, i.e., the desired configuration of the component assembly to be formed. Typically, the friction stir welding operation is performed in accordance with DPS 10.700. For example, the articles **22, 26** can be arranged as illustrated in Figure 3 in the desired configuration of a final finished assembly. As shown in Figure 4, an assembly **40** can be formed by forming a friction stir weld joint **42** to join the articles **22, 26,** with the corresponding surfaces **28, 30** of the first and second articles **22, 26** in contact, and with the articles in the predetermined configuration. For purposes of illustrative clarity, Figure 4 illustrates the structural assembly **40** with the friction stir weld joint **42** partially formed and with a friction stir welding device **44** for forming the weld joint **42.** The friction stir welding device **44** includes a pin or tool **46** having a friction stir welding pin or tool portion **50** that extends from a shoulder **48** of the tool or pin **46.** One or more components or actuators **52** are provided for rotating the tool **46,** e.g., in a rotational direction **54,** and transversely moving the tool **46** along the articles **22, 26,** e.g., in direction **56.** Thus, the rotating tool **46** can be inserted at least partially through each of the articles **22, 26** and urged along the path defined by the uncoated second surface portion **34** to plasticize the material of the articles **22, 26** and mix or blend the material so that the friction stir weld joint **42** is formed as the material cools and hardens during reconsolidation.

As shown in Figure 4, the friction stir weld joint **42** is formed coincident with the second surface portion **34,** i.e., between the edges **36, 38** of the first surface coated portions **32** of the first article **22** so that the first surface portions **32** remain substantially separate or unwelded to the second article **26.** In other words, the uncoated second surface portion **34** can be friction welded to the second article **26,** without welding the coated first surface portions **32** to the second article **26.** In this way, the coating material can be left to provide corrosion protection to the articles **22, 26** at the location of the adjacent mating first surface portions **32,** i.e., proximate to the weld joint **42** and coincident with crevices that typically result between the articles **22, 26.** However, the coating material can remain substantially unmelted and/or unmixed during the friction stir welding operation, thereby preventing any adverse effects that may occur due to mixing of the coating material into the friction stir weld joint **42** and any adverse effects on the welded joint integrity that may result from such mixing. With the articles **22, 26** assembled by friction stir welding in the desired configuration, the articles define the component assembly **40.**

As shown in Figures 2-4, the pair of components or articles **22, 26** define a material interface **60** between the articles **22, 26** that is coincident with the first surface portions **32.** The coating material that is provided at the material interface **60** can be cured, e.g., by the friction stir welding operation, to form a heat-cured corrosion-resistant organic material **62** at the material interface **60** as shown in Figure 4. The friction stir weld joint **42** can be disposed at a friction stir weld interface **64** between the components, i.e., coincident with the second surface portion **34,** and thus at a location mutually exclusive of the heat-cured interface **60.** In particular, the organic material can be disposed along opposite edges of the friction stir weld interface **64** as shown so that the two portions of the material interface **60** define a path therebetween that extends along the articles **22, 26,** with the friction stir weld interface **64** extending elongate along the path.

After the friction stir welding operation, the component assembly **40** can be subjected to a thermal treatment, i.e., a heat-treating operation. See block **20** of Figure 1. The thermal treatment is typically performed to enhance the material properties of one or more of the articles **22, 26** of the component assembly **40.** That is, the base metal of the articles and the applied coating are heated together as an assembly to a suitable elevated temperature so that the aluminum-alloy is precipitation heat-treated by artificial-aging to its final desired strength state. Preferably, the temperature and time for this thermal treatment is selected to be that required to achieve the desired properties of the aluminum-alloy, base metal, as provided in the industry-accepted and proven process standards for that particular aluminum-alloy material.

In addition, the thermal-treatment operation can also optionally effect a curing of the organic coating material to its desired, final bonded state. Thus, the thermal treatment of the articles **22, 26** and the curing of the coating material can be achieved as a combined operation and, typically, as a simultaneous operation. That is, the coating material can be adapted to be cured during a thermal treatment of sufficient temperature and sufficient duration for performing the heat treating of the articles **22, 26.** For example, in the case of the 7075 aluminum-alloy articles and 'Hi-Kote 1' coating representative of those coatings discussed above, the heat-treatment process can include heating the component assembly **40** to a temperature of about 120°C (250°F) for between about 12 to 24 hours to stabilize the coating material, followed by an ambient air cool to room temperature.

Thereafter, the component assembly **40** can be finished by performing a colorless conversion coating of the assembly per DPS 9.45 or MIL-C-5541, applying an epoxy primer coating in accordance with DPS 4.50-36 or MIL-PRF-23377, applying a gloss white epoxy topcoat, such as DN 7507, in accordance with DPS 4.50-36, and followed by a final edge sealing of the component assembly.

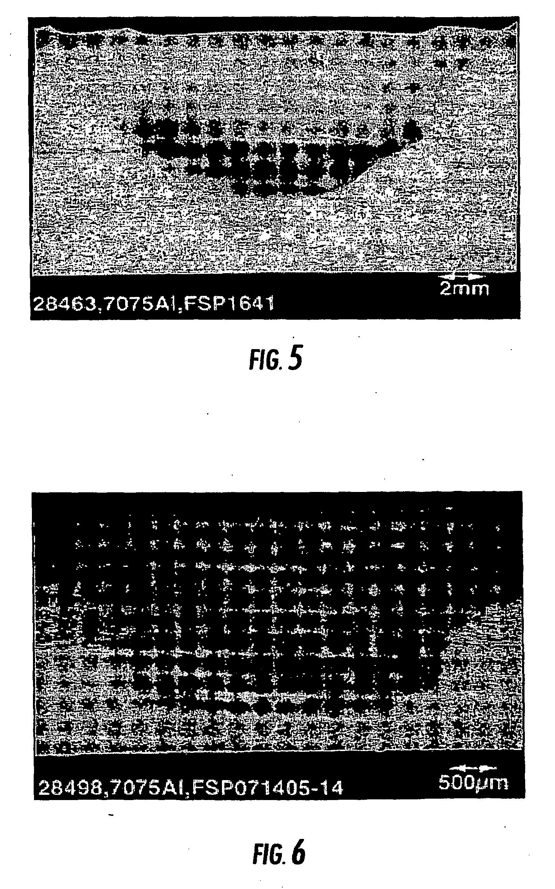

Figures 5 and 6 illustrate two micrograph cross-section images of friction stir weld joints formed between articles according to the present invention. In particular, Figure 5 illustrates an embodiment in which the mating surfaces **28, 30** of the articles **22, 26** were degreased and the first surface portions **32** were coated before friction stir welding operation to produce the illustrated friction stir weld joint. In the embodiment of Figure 6, the mating surfaces **28, 30** were mechanically cleaned by an oxide grit blasting operation prior to the coating of the first surface portions **32** and consequent friction stir welding operation.

According to one embodiment, the organic coating material is applied to the anodized, unsealed surface of one of the articles, which are not in their final heat-treated state. The heat-treatment operation of the component assembly after friction stir welding is thereafter completed to bring the finished assembly to its full strength by heating to an elevated temperature in a precipitation heat-treatment. The coating is simultaneously cured while achieving the article's required metallurgical properties during the precipitation heat-treatment/aging according to the combination of temperature(s), time(s), and environment(s) specified for the particular aluminum-alloy material of the component assembly. Thus, no separate curing procedure is required for the coating after the assembly has been heat-treated, and the coating material protects the assembly from corrosion between the articles, i.e., adjacent the friction stir weld joint.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims.

## Claims

1. A method for forming a structural assembly (40), the method comprising:
providing first (22) and second (26) aircraft components of an aluminum alloy material;
friction stir welding (18) the first (22) and second (26) aircraft components together, the first component (22) including a treated surface having a coated portion (32) with a curable organic material, and an uncoated portion (34),
**characterized by**
the treated surface (32) abutting the second component (26), such that the friction stir weld joint (42) is formed at the uncoated portion (34);
the curable organic material comprising a phenolic resin and an organic solvent; and
thermally treating (20) the welded components for artificially aging the components made of aluminum-alloy material and simultaneously curing the organic coating material.

2. The method according to Claim 1 wherein the thermally treating step comprises heat treating the welded components.

3. The method according to Claim 1, further comprising providing the first (22) and second (26) components comprised of an aluminum-alloy, the first component defining the coated (32) and uncoated (34) portions of the treated surface corresponding in contour to a surface of the second component (26).

4. The method according to Claim 1 wherein said friction stir welding step comprises disposing a friction stir welding pin (46) through the uncoated portion (34) of the first component (22) and through a surface of the second component (26) and rotating the friction stir welding pin such that the pin plasticizes and mixes material of the components proximate to the pin, thereby forming the friction stir weld joint (42).

## Patentansprüche

1. Verfahren zum Bilden einer strukturellen Anordnung (40), wobei das Verfahren aufweist:
Vorsehen erster (22) und zweiter (26) Luftfahrzeug-Komponenten aus einem Aluminiumlegierungsmaterial;
Zusammenschweißen mittels Reibschweißen (18) der ersten (22) und zweiten (26) Luftfahrzeug-Komponenten, wobei die erste Komponente (22) eine behandelte Oberfläche mit einem Abschnitt, der mit einem härtbaren organischen Material beschichtet ist, und mit einem nicht beschichteten Abschnitt (34) aufweist,
**dadurch gekennzeichnet, dass**
die behandelte Oberfläche (32) derart gegen die zweite Komponente (26) stößt, dass die Reibschweißnaht (42) beim nicht beschichteten Abschnitt (34) gebildet ist;
wobei das härtbare organische Material ein phenolisches Harz und ein organisches Lösungsmittel aufweist; und
die geschweißten Komponenten wärmebehandelt (20) werden, um die aus Aluminiumlegierungsmaterial hergestellten Komponenten künstlich zu härten und gleichzeitig das organische Beschichtungsmaterial auszuhärten.

2. Verfahren nach Anspruch 1, wobei der Schritt des Wärmebehandelns eine Wärmebehandlung der geschweißten Komponenten aufweist.

3. Verfahren nach Anspruch 1, das des Weiteren ein Vorsehen der ersten (22) und zweiten (26) Komponenten, die eine Aluminiumlegierung aufweisen, aufweist, wobei die erste Komponente die beschichteten (32) und unbeschichteten (34) Abschnitte der behandelten Oberfläche in einer Kontur entsprechend einer Oberfläche der zweiten Komponente (26) definiert.

4. Verfahren nach Anspruch 1, wobei der Schritt des Reibschweißens ein Anordnen eines Reibschweißstifts (46) durch den nicht beschichteten Abschnitt (34) der ersten Komponente (22) und durch eine Oberfläche der zweiten Komponente (26) sowie ein Rotieren des Reibschweißstifts aufweist, so dass der Stift ein Material der Komponenten, die sich in der Nähe zum Stift befinden, plastifiziert und mischt, wodurch die Reibschweißnaht (42) gebildet wird.

## Revendications

1. Procédé de formation d'un ensemble structural (40), le procédé comprenant :
l'obtention d'un premier composant d'avion (22) et d'un deuxième composant d'avion (26) dans un matériau en alliage d'aluminium ;
le soudage par friction-malaxage (18) des premier (22) et deuxième (26) composants d'avion, le premier composant (22) comprenant une surface traitée ayant une partie revêtue (32) avec un matériau organique durcissable et une partie non revêtue (34),
**caractérisé par**
la surface traitée (32) jouxtant le deuxième composant (26), de telle sorte que le joint soudé par friction-malaxage (42) est formé au niveau de la partie non revêtue (34) ;
le matériau organique durcissable comprenant une résine phénolique et un solvant organique ; et
le traitement thermique (20) des composants soudés pour vieillir artificiellement les composants constitués d'un matériau en alliage d'aluminium et durcir simultanément le matériau de revêtement organique.

2. Procédé selon la revendication 1 dans lequel l'étape de traitement thermique comprend le traitement thermique de composants soudés.

3. Procédé selon la revendication 1, comprenant en outre l'obtention des premier (22) et deuxième (26) composants constitués d'un alliage d'aluminium, le premier composant définissant les parties revêtue (32) et non revêtue (34) de la surface traitée correspondant en contour à une surface du deuxième composant (26).

4. Procédé selon la revendication 1 dans lequel ladite étape de soudage par friction-malaxage comprend la mise en place d'une tige de soudage par friction-malaxage (46) à travers la partie non revêtue (34) du premier composant (22) et à travers une surface du deuxième composant (26) et la rotation de la tige de soudage par friction-malaxage de telle sorte que la tige plastifie et mélange le matériau des composants proches de la tige, formant ainsi le joint soudé par friction-malaxage (42).
